# EUROPÄISCHE PATENTANMELDUNG

(11) **EP 0 905 423 A2**
(43) Veröffentlichungstag der Anmeldung: **31.03.1999**
(21) Anmeldenummer: 98810852.8
(22) Anmeldetag: 27.08.1998
(51) Int. Cl.: F16K 5/06

(54) **Dichtungsanordnung**

(30) Priorität: 24.09.1997 DE 19742002
(71) Anmelder: Georg Fischer Rohrleitungssysteme AG, CH-8201 Schaffhausen (CH)
(72) Erfinder: Miklo, Jürgen, 8240 Thayngen (CH); Davatz, Kaspar, 7215 Fanas (CH)
(74) Vertreter: Rottmann, Maximilian R.

(57) **Zusammenfassung**

Bei einer Dichtungsanordnung für einen in einer Bohrung (20) fluiddicht gelagerten Zapfen (16) ist zwischen Zapfen und Bohrung ein Dichtring (22) angeordnet. Der Zapfen (16) weist eine Einlegeposition (A) zum vorspannungsfreien Einlegen des Dichtrings (22) und eine Betriebsposition (B) auf, wobei der Durchmesser des Zapfens (16) im Bereich der Betriebsposition (B) grösser ist als im Bereich der Einlegeposition (A) und der Dichtring über einen Gas- oder Fluiddruck von der Einlegeposition (A) in die Betriebsposition (B) einpressbar ist. Mit der Dichtanordnung kann eine Beschädigung der Dichtung beim Zusammenbau verhindert werden.

## Beschreibung

Die Erfindung betrifft eine Dichtungsanordnung für einen in einer Bohrung fluiddicht gelagerten Zapfen, mit einem zwischen Zapfen und Bohrung angeordneten Dichtring. Im Rahmen der Erfindung liegt auch ein Kugelhahn mit einer derartigen Dichtungsanordnung.

Eine herkömmliche Dichtung zwischen einer Bohrung und einem in der Bohrung fluiddicht geführten Zapfen, wie sie beispielsweise bei Kugelhähnen Anwendung findet, weist am Zapfen eine Ringnut auf, in die vor dem Einsetzen des Zapfens in die Bohrung eine O-Ringdichtung unter Vorspannung eingelegt wird. Zur Erzielung der geforderten Dichtheit zwischen Zapfen und Bohrung ist der Aussendurchmesser des in die Ringnut eingelegten Dichtrings grösser als der Bohrungsdurchmesser, sodass der Dichtring im Betriebszustand zwischen Zapfen und Bohrung dichtend eingeklemmt ist.

Kugelhähne werden in unterschiedlicher Ausführung für verschiedene Anwendungsbereiche eingesetzt. Handelsübliche Kugelhähne, die vor allem in Kunststoff-Rohrleitungssystemen Verwendung finden, sind grösstenteils aus Kunststoff-Einzelteilen zusammengesetzt. Bei der Herstellung des Gehäuses ergibt sich beim Uebergang zwischen der Bohrung und dem Gehäuseinnenteil formtechnisch bedingt eine scharfe Kante. Damit der Dichtring beim Einsetzen des Zapfens in die Bohrung nicht zerschnitten wird, was zu einer undichten Armatur führen würde, muss die Zapfenbohrung zur Entschärfung der Kante nachbearbeitet werden.

Der Erfindung liegt daher die Aufgabe zugrunde, eine Dichtungsanordnung der eingangs genannten Art zu schaffen, bei welcher die spanende Nachbearbeitung der Zapfenbohrung entfallen kann und die sich insbesondere für den Einsatz in Kugelhähnen eignet.

Erfindungsgemäss wird die Aufgabe dadurch gelöst, dass der Zapfen eine Einlegeposition mit einem ersten Zapfendurchmesser zum vorspannungsfreien Einlegen des Dichtrings und eine Betriebsposition mit einem zweiten Zapfendurchmesser aufweist, wobei der zweite Zapfendurchmesser grösser ist als der erste Zapfendurchmesser und der Dichtring über einen Gas- oder Fluiddruck von der Einlegeposition in die Betriebsposition einpressbar ist.

Bei der erfindungsgemässen Dichtungsanordnung befindet sich der Dichtring während des Einbaus des Zapfens in die Bohrung in seiner Einlegeposition. Hierbei ist der Aussendurchmesser des Dichtrings bevorzugt etwa gleich gross wie der Innendurchmesser der Bohrung, sodass auch ein scharfkantiger Bohrungseingang keine Schneidwirkung auf den in die Bohrung einzuführenden Dichtring ausüben kann.

Zweckmässigerweise nimmt der Zapfendurchmesser der Einlegeposition gegen die Betriebsposition hin kontinuierlich zu. Diese stetig ansteigende Rampe ermöglicht das nachträgliche Einpressen des Dichtrings in die Betriebsposition mit einem verhältnismässig geringen Gas- oder Fluiddruck.

Bei einer bevorzugten Ausgestaltung der erfindungsgemässen Dichtungsanordnung ist der Uebergang von der Einlegeposition zur Betriebsposition durch einen Absatz gebildet, dessen Durchmesser grösser ist als der Zapfendurchmesser der Betriebsposition. Mit dieser Massnahme ist sichergestellt, dass selbst bei einem Vakuum der Dichtring nicht wieder in die ungespannte Einlegeposition zurückgezogen wird.

Ein bevorzugtes Anwendungsgebiet der erfindungsgemässen Dichtungsanordnung ist deren Einsatz in Kugelhähnen. Insbesondere Kugelhähne aus Kunststoff lassen sich damit einfach und kostengünstig herstellen, da jegliche Nachbearbeitung des Gehäuses im Bereich der Zapfenbohrung entfallen kann.

Weitere Vorteile, Merkmale und Einzelheiten der Erfindung ergeben sich aus der nachfolgenden Beschreibung eines bevorzugten Ausführungsbespiels sowie anhand der Zeichnung; diese zeigt schematisch in
- Fig.1: einen Längsschnitt durch einen Kugelhahn mit einge setztem Dichtring in ungespannter Position;
- Fig.2: den Kugelhahn von Fig. 1 mit dem Dichtring in Dicht position;
- Fig.3: den Zapfen des Kugelhahns von Fig.1 in vergrösserter Darstellung;
- Fig.4: die Bohrung des Kugelhahns von Fig.1 in vergrösser ter Darstellung.

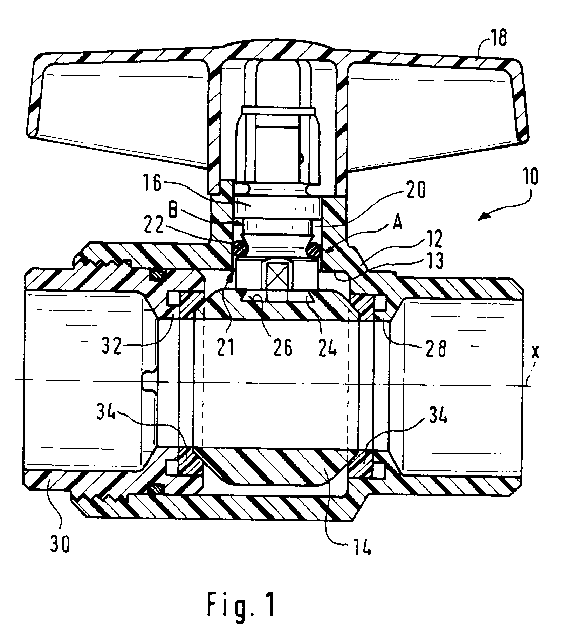

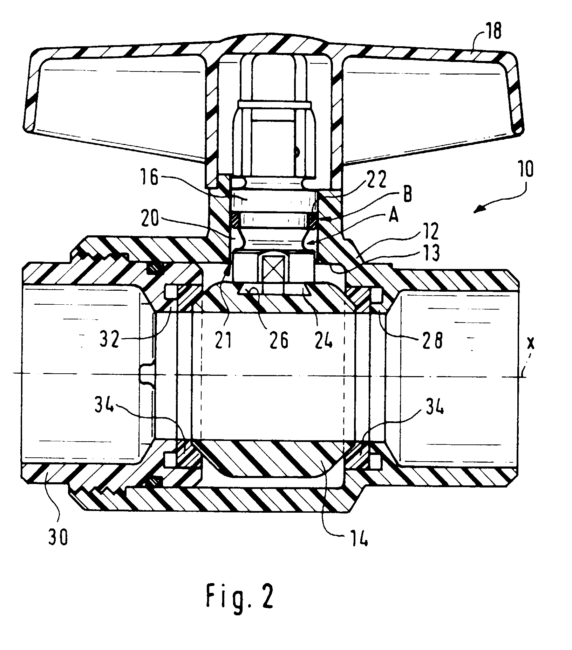

Ein in Fig. 1 und 2 dargestellter Kugelhahn 10 weist ein Gehäuse 12 mit in diesem gelagerter Kugel 14 auf. Ein Zapfen 16 mit aufgesetztem Stellhebel 18 durchdringt eine in der Wand des Gehäuses 12 angeordnete Bohrung 20 und liegt dieser über einen Dichtring 22 fluiddicht an. Das in das Gehäuse 12 eindringende freie Ende des Zapfens 16 ist als Zapfenführung 24 ausgebildet und steht mit einer in der Kugel 14 angeordneten Nut 26 in Eingriff.

In das Gehäuse 12, dessen im wesentlichen zylindrische Innenwand 13 einen Durchflusskanal mit einer Durchflussachse bzw.-richtung x begrenzt, ist ein rohrförmiger Stutzen 30 mit einem ringförmigen Anschlagteil 32 eingesetzt. Dem Stutzen 30 gegenüberliegend ist das Gehäuse zu einem zweiten ringförmigen Anschlagteil 28 ausgeformt. Die Kugel 14 ist zwischen den Anschlagteilen 28, 32 gelagert, wobei zur fluiddichten Anlage zwischen den Anlageteilen 28, 32 und der Kugel 14 Gleitringdichtungen 34 eingesetzt sind.

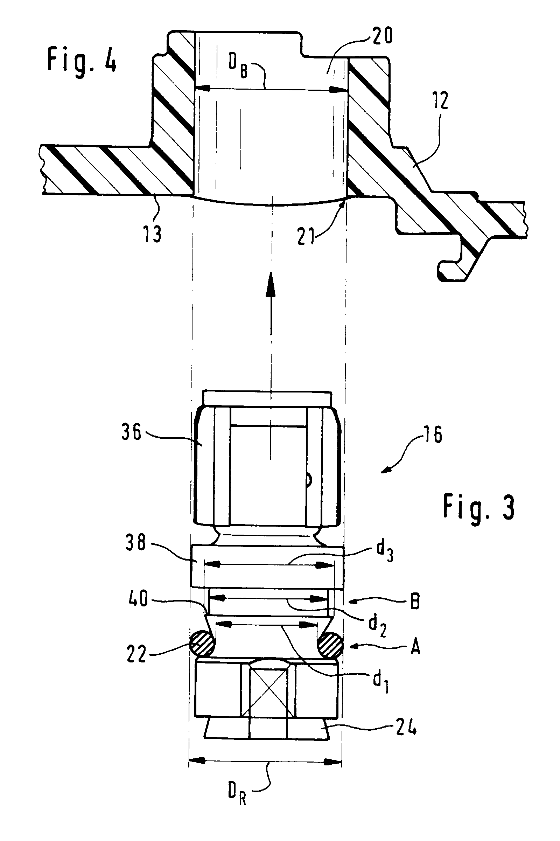

Der in Fig. 3 gezeigte Zapfen 16 ist an einem Ende mit einem Kopf 36 zum Aufsetzen des Stellhebels 18 ausgestattet. Das andere Ende des Zapfens 16 bildet die Zapfenführung 24 zum Anschluss an die Kugel 14. Zwischen dem Kopf 36 und der Zapfenführung 24 ist ein Führungsring 38 zur Führung des Zapfens 16 in der Bohrung 20 angeordnet. Zwischen dem Führungsring 38 und der Zapfenführung 24 liegt die eigentliche Dichtungsanordnung, die aus einer der Zapfenführung 24 benachbarten Einlegeposition A und einer an diese anschliessenden Betriebsposition B, die durch den Führungsring 38 begrenzt ist, besteht.

Der Dichtring 22 befindet sich in Fig. 3 in der Einlegeposition A und weist keine Vorspannung auf. Der Aussendurchmesser D_{R} des Dichtrings 22 in der Einlegeposition A ist im wesentlichen gleich gross wie der Durchmesser D_{B} der in Fig. 4 dargestellten Bohrung 20.

Aus Fig. 3 und 4 ist ohne weiteres ersichtlich, dass beim Einsetzen des Zapfens 16 von der Innenseite des Gehäuses 12 in die Bohrung 20 keine Verletzung des Dichtrings 22 an der formtechnisch bedingten scharfen Kante 21 beim Uebergang der Bohrung 20 in die Innenwand 13 des Gehäuses 12 auftreten kann.

Der Durchmesser d₂ des Zapfens 16 bei der Betriebsposition B ist grösser als der Durchmesser dₗ des Zapfens an der Einlegeposition A. Hierbei nimmt der Zapfendurchmesser der Einlegeposition gegen die Betriebsposition hin kontinuierlich zu. Der Uebergang von der Einlegeposition A zur Betriebsposition B wird durch einen ringförmigen Absatz 40 gebildet, dessen Durchmesser d₃ um beispielsweise 0,4 mm grösser ist als der Zapfendurchmesser d₂ der Betriebsposition.

Nach dem Zusammensetzen des Kugelhahns 10 befindet sich gemäss Fig. 1 der Dichtring 22 vorspannungsfrei in der Einlegeposition A. Durch Anlegen eines Prüfdrucks p, der beispielsweise 6 bar beträgt, wird der Dichtring 22 aus der Einlegeposition A in die in Fig. 2 gezeigte Betriebsposition B gepresst. Die Ausbildung der Einlegeposition A in der Form einer zur Betriebsposition B stetig ansteigenden Rampe ermöglicht das Einschiessen des Dichtrings 22 in die Betriebsposition B mit einem verhältnismässig geringen Gas- oder Fluiddruck. Der ringförmige Absatz 40 beim Uebergang von der Betriebsposition B in die Einlegeposition A verhindert selbst unter Vakuum ein Zurückspringen des Dichtrings 22 in die ungespannte Position.

## Patentansprüche

1. Dichtungsanordnung für einen in einer Bohrung (20) fluiddicht gelagerten Zapfen (16), mit einem zwischen Zapfen und Bohrung angeordneten Dichtring (22), dadurch gekennzeichnet, dass der Zapfen (16) eine Einlegeposition (A) mit einem ersten Zapfendurchmesser (d₁) zum vorspannungsfreien Einlegen des Dichtrings (22) und eine Betriebsposition (B) mit einem zweiten Zapfendurchmesser (d₂) aufweist, wobei der zweite Zapfendurchmesser (d₂) grösser ist als der erste Zapfendurchmesser (d₁) und der Dichtring (22) über einen Gas- oder Fluiddruck (p) von der Einlegeposition (A) in die Betriebsposition (B) einpressbar ist.

2. Dichtungsanordnung nach Anspruch 1, dadurch gekennzeichnet, dass der Aussendurchmesser (D_{R}) des Dichtrings (22) in der Einlegeposition (A) etwa gleich gross ist wie der Durchmesser (D_{B}) der Bohrung (20).

3. Dichtungsanordnung nach Anspruch 1 oder 2, dadurch gekennzeichnet, dass der Zapfendurchmesser (d₁) der Einlegeposition (A) gegen die Betriebsposition (B) hin kontinuierlich zunimmt.

4. Dichtungsanordnung nach einem der Ansprüche 1 bis 3, dadurch gekennzeichnet, dass der Uebergang von der Einlegeposition (A) zur Betriebsposition (B) durch einen ringförmigen Absatz (40) gebildet ist, dessen Durchmesser (d₃) grösser ist als der Zapfendurchmesser (d₂) der Betriebsposition (B).

5. Kugelhahn mit einer Dichtungsanordnung für einen in einer Bohrung (20) fluiddicht gelagerten Zapfen (16), mit einem zwischen Zapfen und Bohrung angeordneten Dichtring (22), dadurch gekennzeichnet, dass der Zapfen (16) eine Einlegeposition (A) mit einem ersten Zapfendurchmesser (d₁) zum vorspannungsfreien Einlegen des Dichtrings (22) und eine Betriebsposition (B) mit einem zweiten Zapfendurchmesser (d₂) aufweist, wobei der zweite Zapfendurchmesser (d₂) grösser ist als der erste Zapfendurchmesser (d₁) und der Dichtring (22) über einen Gas- oder Fluiddruck (p) von der Einlegeposition (A) in die Betriebsposition (B) einpressbar ist.

6. Kugelhahn nach Anspruch 5, dadurch gekennzeichnet, dass der Aussendurchmesser (D_{R}) des Dichtrings (22) in der Einlegeposition (A) etwa gleich gross ist wie der Durchmesser (D_{B}) der Bohrung (20).

7. Kugelhahn nach Anspruch 5 oder 6, dadurch gekennzeichnet, dass der Zapfendurchmesser (d₁) der Einlegeposition (A) gegen die Betriebsposition (B) hin kontinuierlich zunimmt.

8. Kugelhahn nach einem der Ansprüche 5 bis 7, dadurch gekennzeichnet, dass der Uebergang von der Einlegeposition (A) zur Betriebsposition (B) durch einen ringförmigen Absatz (40) gebildet ist, dessen Durchmesser (d₃) grösser ist als der Zapfendurchmesser (d₂) der Betriebsposition (B).

9. Kugelhahn nach einem der Ansprüche 5 bis 8, dadurch gekennzeichnet, dass der zum Einpressen des Dichtrings (22) von der Einlegeposition (A) in die Betriebsposition (B) erforderliche Gas- oder Fluiddruck (p) dem bei der Dichtheitsprüfung des Kugelhahns vorgegebenen Prüfdruck entspricht.
